Europäisches Patentamt

European Patent Office

Office européen des brevets

(11) Publication number: **0 092 027**
A2

# EUROPEAN PATENT APPLICATION

(21) Application number: **83101034.3**

(22) Date of filing: **03.02.83**

(51) Int. Cl.³: **G 01 K 11/06**

(30) Priority: **12.03.82 JP 39664/82**

(43) Date of publication of application: **26.10.83**
**Bulletin 83/43**

(84) Designated Contracting States: **CH DE FR LI**

(71) Applicant: **Hitachi, Ltd., 5-1, Marunouchi 1-chome, Chiyoda-ku Tokyo 100 (JP)**

(72) Inventor: **Hirasawa, Kunio, 2-13-22, Mizuki-cho, Hitachi-shi Ibaraki-ken (JP)**
Inventor: **Okumura, Kiyoshi, yuzan-ryo, 4-1-1, Suwa-cho, Hitachi-Shi Ibaraki-ken (JP)**
Inventor: **Takeuchi, Shigetaka, 2-34-5, Higashi-ohnuma-cho, Hitachi-shi Ibaraki-ken (JP)**
Inventor: **Miyashita, Takao, 364-3, Shinbori, Kumagaya-shi Saitama-ken (JP)**
Inventor: **Hondou, Kenichi, 2-4-1, Ayukawa-cho, Hitachi-shi Ibaraki-kne (JP)**

(74) Representative: **Strehl, Peter, Strehl, Schübel-Hopf, Schulz Patentanwälte Widenmayerstrasse 17 Postfach 22 03 45, D-8000 München 22 (DE)**

(54) **Local temperature rise monitor for electrical apparatus.**

(57) An electrical apparatus arranged in a hermetically sealed container is provided with a tracer container (17) which fuses at a given temperature, and a tracer substance (18) capable of being detected with a detecting means is enclosed in the tracer container (17). Since the temperature to be detected can be determined according to the tracer container (17), even if the temperature to be detected changes, it is possible to use the same tracer substance (18) and the same detecting means as arranged so as to be desirable for the electrical apparatus.

ACTORUM AG

## LOCAL TEMPERATURE RISE MONITOR FOR

## ELECTRICAL APPARATUS

### BACKGROUND OF THE INVENTION

The present invention relates to a local temperature rise monitor for an electrical apparatus and more particularly to a monitor for detecting and monitoring the local temperature rise in an electrical apparatus having a high-voltage circuit housed in a container hermetically or substantially hermetically sealed.

Conventional local temperature rise monitors for such electrical apparatus measure the gas or fine particles emitted under high temperature from the specific resin or the like directly applied to a component of the electrical apparatus by means of a proper detector and provide a display or an alarm. Such prior art is disclosed in Japanese Patent Laid-Open No. 33342/1978, for example.

The combination of the temperature capable of being monitored and the gas to be detected is, however, determined by the applied specific substance according to such method in which a specific substance (specific resin) is directly applied to a component and the gas generated through vaporization, sublimation or pyrolysis of the substance itself is detected. Consequently, the above method has a remarkably low degree of freedom of the combination and it is extremely limited to apply the method especially to electrical apparatus needing a high reliability in, particularly, insulating performance or the like. In other words, since when the temperature to be monitored changes, the specific substance must be changed and thus, the gas to be detected also changes. Consequently, every time the temperature to be monitored changes, it is necessary to reexamine the gas-detecting method, sensitivity and effects on the essential various performances of the electrical apparatus, such as insulatining performance, together with the effects exerted on the specific substance by the insulating medium of the electrical apparatus, e.g., air, oil or sulfur hexafluoride, or the decomposition products thereof.

SUMMARY OF THE INVENTION

An object of the invention is to provide a local temperature rise monitor for an electrical apparatus, in which monitoring of the local

- 3 -

0092027

temperature rise is facilitated.

Another object of the invention is to provide a local temperature rise monitor for an electrical apparatus, capable of monitoring with a single detecting means even in specifications differing in the temperature to be monitored.

According to the invention, a tracer container is disposed in an electrical apparatus which is adapted to be hermetically sealed at normal temperatures but opens when a given temperature is reached, and a tracer substance is enclosed . in the tracer container which is capable of being detected by means of a detector when released from the tracer container.  The above-mentioned objects are attained by separating the tracer container and the tracer substance from each other.

BRIEF DESCRIPTION OF THE DRAWINGS

Fig. 1 is a typical sectional view of a gas-insulated switching apparatus to which a local temperature rise monitor according to the invention is . applied;

Fig. 2 is an enlarged sectional view of an essential part of the gas-insulated switching apparatus of Fig. 1;

Fig. 3 is a further enlarged sectional view of the essential part of Fig. 2;

Fig. 4 is a sectional view of a tracer container in accordance with another preferred embodiment of the local temperature rise monitor for an electrical apparatus according to the invention; and

Fig. 5 is a sectional view of a tracer container in accordance with still another preferred embodiment of the local temperature rise monitor for an electrical apparatus according to the invention.

DESCRIPTION OF THE PREFERRED EMBODIMENTS

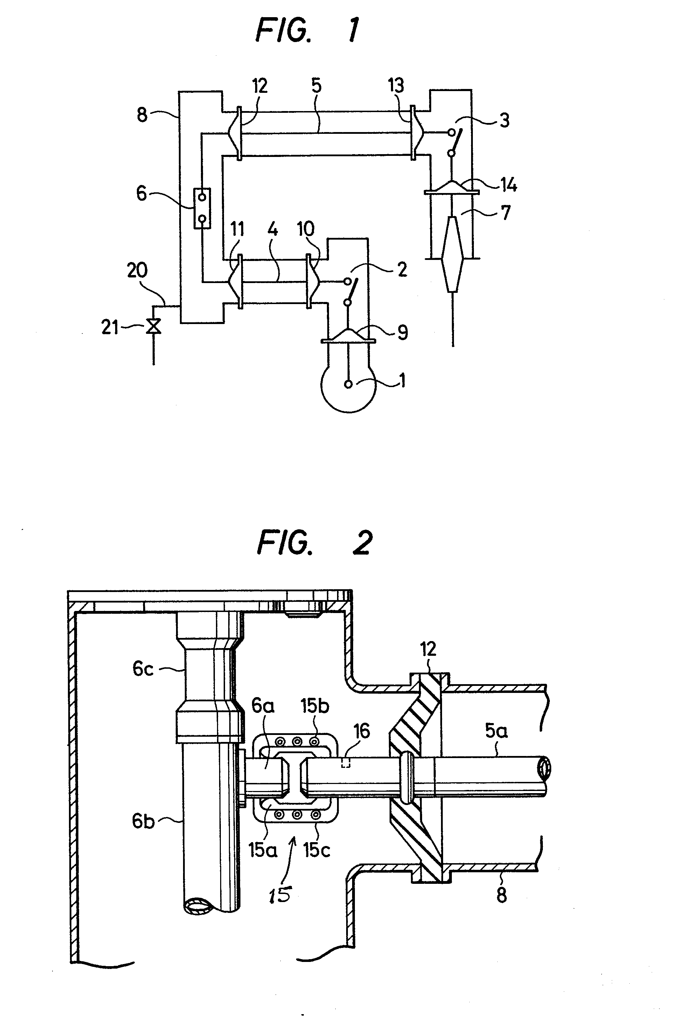

Figures 1 to 3 show a preferred embodiment of the invention applied to a gas-insulated switching apparatus. The gas-insulated switching apparatus (referred to as "apparatus" hereinafter) comprises a bus 1, isolators 2, 3, connecting buses 4, 5, a breaker 6, a cable head 7 and the like. The high-voltage conductors such as the connecting buses 4, 5 and the like and the apparatus elements such as the isolators 2, 3 and the breaker 6 and the like are housed in a hermetically sealed container 8, which is filled with an insulating gas such as sulfur

- 5 -                                    0092027

hexafluoride.  If necessary, independent gas sections are formed by means of gastight insulating spacers 9 - 14 for the apparatus elements respectively.

In such apparatus, not all parts necessarily have the possibility of a local temperature rise, which may occur particularly in the high-voltage portions.  There is practically no possibility that temperature locally rises in the intermediate part of a high-voltage conductor made of a conductive metal such as aluminum or copper and having a simple configuration such as a cylindrical or columnar shape.  Consequently, the parts needing to be monitored are the following connecting parts of the apparatus elements.  In other words, the breaker 6 and the connecting bus 5 are hermetically separated from each other by the insulating spacer 12, and a cylindrical bus conductor 5a (Fig. 2a) penetrates the insulating spacer 12 so as to enter the inside of the breaker 6.  Facing thereto, a terminal conductor 6a of the breaker 6 is secured to a main conductor 6b coupled to contact members (not shown) of the breaker 6 at the other end.  Moreover, these members are secured to the container of the breaker 6 through an insulating tube 6c. The bus
conductor 5a and the terminal conductor 6a are
electrically connected together by means of a
collector 15, which comprises a collector piece
15a, a spring 15b, a shield 15c and the like.
There is possibility that a local temperature rise
occurs at, e.g., a portion 16 near the collector
15 at the connecting part thus arranged.

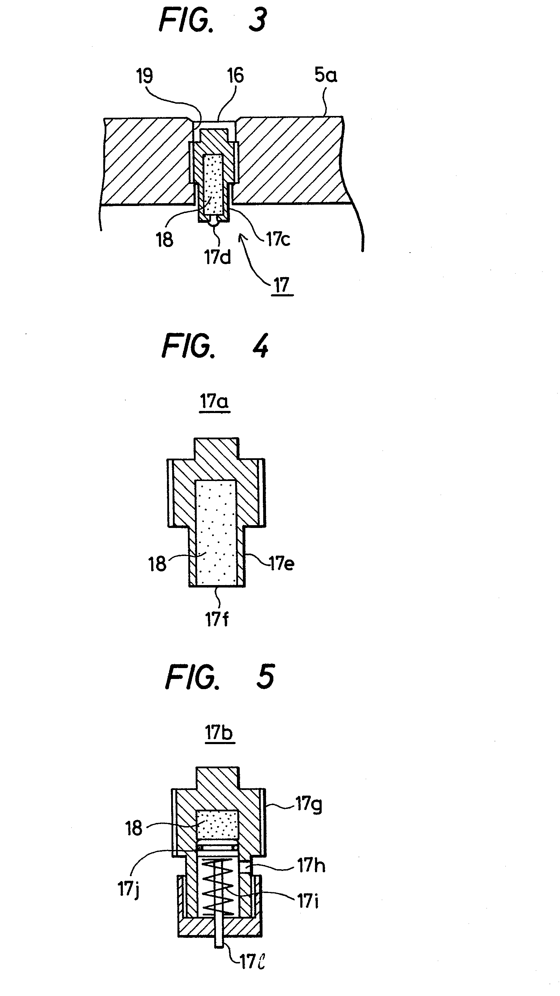

In the preferred embodiment, a detector
comprises, as shown in Fig. 3, a tracer container
17, a tracer substance 18 enclosed in the tracer
container 17 and capable of being detected
separately from the insulating medium of the
electrical apparatus, and a detecting means (not shown)
capable of detecting the tracer substance 18
released from the tracer container 17 into the
hermetically sealed container 8. Namely, a screw
hole 19 is provided at the portion 16 near the
collector 15, and the tracer container 17 is
installed in the screw hole 19. Although the
tracer container 17 has a hermetically sealed
structure as shown in Fig. 3, a part 17d of the
container wall 17c is made of a substance which
fuses when the temperature of the bus conductor 5a
rises. The tracer substance 18 is initially enclosed in the hermetically sealed space. When the temperature rises the part 17d of the tracer container 17 fuses, and the tracer substance 18 released into the hermetically sealed container 8 is detected with the detecting means. Thus, the temperature rise is detected. By properly selecting the substance which fuses when temperature rises and the tracer substance 18 to be detected, the detection of the local temperature rise is facilitated, so that it is possible to obtain a local temperature rise monitor for an electrical apparatus facilitating monitoring the local temperature rise. This is because the tracer container 17 as a temperature-sensitive means for detecting the temperature rise and the tracer substance 18 to be detected are separated from each other. Thereby, it becomes possible to freely combine the tracer container 17 and the tracer substance 18. A desired temperature to be monitored can be detected according to the combination, so that there is no need for reexamination of the detecting method and the like conventionally required every time the temperature to be monitored changes.

A high-molecular compound or a low-melting alloy may be employed as the substance which constitutes the part 17d of the container wall 17c of the tracer container 17' and fuses when temperature rises.    As the high-molecular compound, for example, polyethylene (melting point: 126 - 135°C), polypropylene (melting point: 168 - 170°C) or the like may be employed, while as the low-melting alloy, a binary or higher-multiple alloy may be employed which comprises Bi, Pb, Sn, Cd, Zn, Ag, In or Sb in addition to a metal having a melting point lower than Sn.    A eutectic or noneutectic alloy selected from a metal group comprising Bi, Pb, Sn, Cd, Zn, Ag, In, Sb and the like is preferable because it is known that the melting points of such alloys can be varied within a range of 60°C - 248°C by properly selecting the ratio of components as follows: the melting point of the eutectic alloy comprising Bi (57.5 %), Sn (17.3 %) and In (25.2 %) is 78.8°C, that of the eutectic alloy comprising Bi (60.0 %) and Cd (40.0 %) is 144°C, and that of the eutectic alloy comprising Pb (82.5 %) and Cd (17.5 %) is 248°C.

As the tracer substance 18, a substance must be selected in consideration of the fact that it can be detected separately from an insulator or an arc-extinguishing medium as the insulating medium generally employed in the objective electrical apparatus, that the substance will not adversely affect the various performances of the electrical apparatus, particularly, the insulating performance when released into the hermetically sealed container 8, that the substance has a high sensitivity in relation to the detecting means, that the substance has a high dispersion rate, and that the substance can be easily separated and collected when released into the hermetically sealed container 8 and mixed with the insulating medium. Included as the substance satisfying the above conditions are known carbon halide, hydrocarbon halide and the like in case of using air, oil, sulfur hexafluoride or the like as the insulating medium. There are a wide variety of such substances, so that even when a certain kind of carbon halide or hydrocarbon halide is used for the purpose of cleaning or the like in the electrical apparatus, it is easy to select a different type of carbon halide or hydrocarbon halide which can be detected separately from the above-mentioned halide and which has the

0092027

above-mentioned desirable properties. Moreover, it is possible to select a substance having a boiling point higher than the insulator or arc-extinguishing medium of the electrical apparatus in order to ensure that the substance can be easily separated and collected even if mixed with the insulating medium, since even if the temperature rises to a given value and the tracer substance 18 is mixed with the arc-extinguishing medium, the substance can be easily separated and replaced with the same tracer substance 18 enclosed in the tracer container 17. In addition, it is desirable that the boiling point of the tracer substance 18 is higher than normal temperatures from the viewpoint of simplification of manufacture of the tracer container 17, since such substance is liquid at normal temperatures.

There are hitherto some known means as the detecting means. A gas chromatograph, for example, is one of the most suitable means for detection. The tracer substance 18 released in the insulating space (inside the hermetically sealed container 8) of the electrical apparatus when the tracer container 17 is opened is detected at the grounding portion by the detecting means such as a gas chromatograph. The tracer substance 18 is generally in the gas state. Consequently, a small amount of vapor generated according to temperature or the like floats and disperses in the electrical apparatus even if a substance having a relatively high boiling point is employed. Although the time needed for the tracer substance 18 to reach the detecting means placed at the grounding portion through dispersion from the opening of the tracer container 17 differs according to the size of the gas section in the electrical apparatus and the combination of the insulating medium and the tracer substance 18, the tracer substance 18 can be detected within at least 10 minutes, according to the experiments carried out by the inventors, even when carbon tetrachloride, which is a carbon halide, is employed as the tracer substance 18 and dispersed into sulfur hexafluoride in the cylindrical hermetically sealed container 8 with a length of 5 m and a volume of 1 $m^3$. In an actual case, an inlet/outlet pipe 20 and a stop valve 21 for supplying and discharging gas are generally provided in at least one place for each of the gas

0092027

sections as shown in Fig. 1, and the detecting means can be mounted to the inlet/outlet pipe 20 if necessary.

Although described above are the tracer container 17, the tracer substance 18, the detecting means and the like which are suitable for the preferred embodiment, if a gas chromatograph is employed for the detecting means, a plurality of substances can be separated by selecting proper columns.    Therefore, even if the combination of a plurality of tracer containers 17 and tracer substances 18 is provided in a single gas section, needed is only a single detecting means and moreover, it is possible to know a plurality of places having the temperature rise as well as the degree of the temperature rise although it is stepwise, so that the conditions inside the electrical apparatus can be made known without aimlessly disassembling the same for inspection.

As an easier way, it is possible to utilize a proper gas checker employing a chemical change in case of needing only off-line monitoring by a monitoring person.    It is effective to utilize, e.g., the detecting tube generally employed for measurement of the working atmosphere, known as the Kitagawa type gas detecting tube.

Fig. 4 shows another preferred embodiment of the invention.  In the embodiment, a part 17f of a tracer container 17a is adapted to open in response to the rise in temperature of the enclosed tracer substance 18.  In other words, the part 17f of a container wall 17e of the tracer container 17a is formed from a thin metal plate. Thereby, the rise in the pressure of the tracer substance 18 enclosed in the hermetically sealed space causes the bursting of the thin metal plate forming the part 17f of the container wall 17e in order to release the tracer substance 18. In case of using as the tracer substance 18 a substance having a boiling point higher than that of the arc-extinguishing medium as well as higher than normal temperatures, the enclosed tracer substance 18 has a saturated vapor pressure corresponding to temperature in the tracer container 17a and generates a pressure more than several times as large as the atmospheric pressure at the temperatures to be monitored, i.e., from several tens of degrees to several hundreds of degrees.

Fig. 5 shows still another preferred embodiment of the invention.    In this embodiment,
a tracer container 17b comprises a small opening
17h formed at a part of a container wall 17g, the
tracer substance 18 enclosed in the hermeticallly
sealed space above the small opening 17h, a spring
17i enclosed against the saturated vapor pressure
of the tracer substance 18, a valve 17$\ell$ and a
gasket 17j so that the part 17h of the tracer
container 17b opens in response to the rise in
temperature of the enclosed tracer substance 18.
In other words, the valve 17$\ell$ is upwardly pressed
by the spring 17i against the saturated vapor
pressure of the tracer substance 18 enclosed in
the hermetically sealed space, which is sealed
with the gasket 17j.    When temperature rises and
the vapor pressure becomes higher, the valve 17$\ell$
is pushed down, so that the tracer substance 18 is
released from the small opening 17h.

It is to be noted also that the tracer
container is not limited to those which are
described above, and it is possible to make the
whole of the tracer container of a high-molecular
compound.    In other words, the tracer container
is formed in a capsular shape as known in the
medical field.    The shell of the capsule is the tracer container, which softens and fuses when temperature rises. Particularly, in case of forming the capsule small, it can be enclosed in a reticulated container or placed at a proper semi-hermetically sealed portion of the electrical apparatus. Moreover, as a physical form of the temperature-sensitive function, it is also possible to employ such a known means as a bimetal or a shape memory alloy. Furthermore, it is also possible to employ an adsorbent, a gas-occluding alloy or the like as the tracer container in a broad sense.

WHAT IS CLAIMED IS:

1.  A local temperature rise monitor for an electrical apparatus comprising

a tracer container (17, 17a, 17b) mounted to an electrical apparatus housed in a container (8) substantially hermetically sealed, and adapted to be hermetically sealed at normal temperatures but open at a given temperature;

a tracer substance (18) enclosed in said tracer container (17, 17a, 17b) and capable of being detected separately from an insulating medium of said electrical apparatus; and

a detecting means for detecting said tracer substance (18) released in said container (8) substantially hermetically sealed from said tracer container (17, 17a, 17b).

2.  The monitor of claim 1 wherein said tracer container (17) has a part (17d) formed of a high-molecular compound which fuses when temperature rises to a given value.

3.  The monitor of claim 1 wherein said tracer container (17) has a part (17d) formed of a low-melting-point alloy which fuses when temperature rises to a given value.

0092027

4. The monitor of claim 1 wherein said tracer container (17a, 17b) has a part (17d, 17$^1$) adapted to open in response to the rise in pressure of said tracer substance (18) enclosed due to the rise in temperature.

5. The monitor of claims 1 to 3 wherein said tracer substance (18) has a boiling point higher than that of said insulating medium of said electrical apparatus.

6. The monitor of any of claims 1 to 3 wherein said tracer substance (18) has a boiling point higher than normal temperatures but lower than a given temperature to be detected.

7. The monitor of any of claims 1 to 6 wherein said tracer substance (18) is carbon halide or hydrocarbon halide.

8. The monitor of any of claims 1 to 7, including a plurality of tracer containers (17, 17a, 17b) enclosing tracer substances (18) different from each other.

9. The monitor of claim 8 wherein said plurality of tracer containers (17, 17a, 17b) have their respective parts open at different temperatures.

1/2

## FIG. 1

## FIG. 2

2/2

## FIG. 3

## FIG. 4

17a

## FIG. 5

17b